**Europäisches Patentamt**

**European Patent Office**

**Office européen des brevets**

(19)

(11) Publication number : **0 475 639 A2**

(12) # EUROPEAN PATENT APPLICATION

(21) Application number : **91307918.2**

(22) Date of filing : **29.08.91**

(51) Int. Cl.⁵ : **G06F 3/06, G11B 7/013**

(30) Priority : **31.08.90 JP 230807/90**
**08.07.91 JP 193435/91**
**12.07.91 JP 198414/91**
**12.07.91 JP 198415/91**

(43) Date of publication of application :
**18.03.92 Bulletin 92/12**

(84) Designated Contracting States :
**DE FR GB IT NL**

(71) Applicant : **KAWASAKI STEEL CORPORATION**
**1-28, 1-chome, Kitahonmachidori**
**Chuo-ku Kobe-shi Hyogo-651 (JP)**

(72) Inventor : **Sawada, Kaname, Tokyo Head Office**
**Kawasaki Steel Corp., 2-3, Uchisaiwai-cho 2-chome**
**Chiyoda-ku, Tokyo 100 (JP)**
Inventor : **Takahashi, Yoshitaka, Tokyo Head Office**
**Kawasaki Steel Corp., 2-3, Uchisaiwai-cho 2-chome**
**Chiyoda-ku, Tokyo 100 (JP)**
Inventor : **Kanagawa, Masaaki, Tokyo Head Office**
**Kawasaki Steel Corp., 2-3, Uchisaiwai-cho 2-chome**
**Chiyoda-ku, Tokyo 100 (JP)**

(74) Representative : **Stebbing, Timothy Charles et al**
**Haseltine Lake & Co. Hazlitt House 28**
**Southampton Buildings Chancery Lane**
**London WC2A 1AT (GB)**

(54) **Hard disk emulator.**

(57)   A hard disk emulator (2) useful as a computer auxiliary memory device, comprising a hard disk drive (4) or non-volatile memory used as a cache memory together with an optical disk drive (5) as a main memory and an emulation unit (3) located among a host computer (1), the optical disk drive (5), and the hard disk drive (4) or non-volatile memory and operable in response to requests for writing and reading of data by the host computer (1) utilizing the hard disk drive (4) or non-volatile memory as the cache memory, whereby use of dedicated hardware and software can be eliminated upon incorporation of the optical disk drive (5) and low throughput of the optical disk drive (5) can be compensated.

EP 0 475 639 A2

The present invention relates to a hard disk emulator such as an optical disk drive, etc., as one of auxiliary memory devices in computers.

Optical disk drives enjoy many advantages, compared with a hard disk drive widely used as auxiliay memory devices in computers, that i) disks in use are exchangeable, ii) there is no fear of any crush occurring because of its non-contact recording system, iii) life time of data on disks is so long, and iv) they have large memory capacity, and so on.

The optical disk drive has been noticed as an auxiliary memory device instead of the hard disk drive in recent years.

However, in order to permit the optical disk drive to widely spread as an auxiliary device in a computer, it has the following problems to be solved at the present time.

First, since the hard disk drive has wide applications as an auxiliary memory device in a computer, it is needed, for connecting the optical disk drive to the computer, to have new hardware and software.

Second, the optical disk drive has lower throughput than that of the hard disk drive. For factors of the optical disk drive having the lower throughput, it can be considered that first, seeking takes a long time, second a data error rate before error correction is severe and hence verification after writing is indispensable, and third the probability of occurrence of defect block replacement is high in view of the error rate problem.

Third, in the case where the optical disk drive is of a MO type overwriting is unlike and reversing time of magnetization direction is required between an erasing cycle and a writing cycle.

The optical disk drive thus suffers particularly in writing from a problem that its processing speed is severely lowered compared with the case in the hard disk drive.

The optical disk drive thus has many advantages but oppositely has many disadvantages simultaneously.

In view of the drawbacks with the prior art, it is a first object of the present invention to eliminate the need of dedicated hardware and dedicated software upon incorporation of the optical disk drive and compensate the low throughput of the optical disk drive.

To achieve the above first object, the present invention comprises an optical disk drive as a main memory, a hard disk drive or a non-volatile memory used as a cache memory together with the optical disk drive, and an emulation unit located among a host computer, said optical disk drive, and the hard disk drive or non-volatile memory, the emulation unit being operable in response to requests of writing and reading of data sent from the host computer using said hard disk drive or non-volatile memory as the cache memory.

More specifically, with the provision of interface specifications conforming to arbitrary hard disk drive specifications, need of new software and hardware is eliminated upon incorporation of the optical disk drive, and the optical disk drive is recognized as a hard disk drive by by the connected host computer and assures emulation as a large capacity hard disk drive by exchanging its optical disk.

Further, the present invention reduces the aforementioned problems with the optical disk drive by making use of a hard disk drive or non-volatile memory as a cache memory upon such emulation.

Hereinafter, a hard disk drive or non-volatile memory used as such a cache memory is also referred to as a data cache unit.

In the case where data to be written sent from the host computer is recorded in said hard disk drive or non-volatile memory while said host computer reads data already recorded, read data is read out from said hard disk drive or non-volatile memory and said optical disk drive. If there is no access from said host computer, said recorded data is transferred from said hard disk drive or non-volatile memory to said optical disk drive or a predetermined amount of data adjoining a read data area is transferred from the optical disk drive to the hard disk drive or non-volatile memory.

With the provision of an emulation function of the hard disk drive as described above, need of dedicated hardware and dedicated software is eliminated upon incorporation of the optical disk drive, and with the provision of the so-called cache memory and background processing low throughput of the optical disk drive is compensated.

In accordance with the present invention, as described above, there are utilized intactly the advantages of the optical disk drive such as exchangeability of disk, a long life and large capacity, and crush free, and in addition there can be compensated the disadvantage of the optical disk drive having low throughput by providing a cache memory and the background processing. Further, when highly randomly accessing data is recorded, the throughput of the optical disk drive can also be expected to exceed that of an emulation target hard disk drive.

Further, in accordance with the present invention, with the provision of emulation function of the hard disk drive, there is eliminated the use of hardware and software inherent to the optical disk drive, and the optical disk drive is also connectable with a host computer instead of the hard disk drive.

However, if the host computer frequently takes accesses, there might be prodeced a fear that a processing can not catch up with those accesses, of updating data in the optical disk drive as the main memory following the newest data of cache data recorded in the hard disk drive or non-volatile memory used as the cache memory.

If it is so, there might be produced a first problem that the hard disk drive or non-volatile memory is filled up whith the cache data not transferred to the main memory and remaininig recorded in the hard disk drive or non-volatile memory.

The data recorded in the hard disk drive or non-volatile memory used as the cache memory carries information at which address of the optical disk drive each data is originally to be recorded. Hereinafter, such information will be referred simply to as address information.

If there is produced the above situation where the host computer frequently takes accesses, there might be produced a second problem that such address information is accumulated and memory capacity of a work memory in which such a address information is stored expires.

Once the hard disk drive or non-volatile memory used as the cache memory is thus filled up with the cache data or the work memory for recording the address information therein is filled up with the address information at the worst, a processing proceeds of transferring the cache data in the hard disk drive or non-volatile memory to the optical disk drive and simultaneously a processing proceeds of putting in order the address information executed following the just-mentioned processing, whereby the accesses from the host computer must wait until the filled state disappears.

Further, if such a filled state is reached and thereupon there occurs any access from the host computer at the worst, access time from the host computer is prolonged including the time the filled state disappears and results in the lowering of the function as the hard disks emulator.

A second object of the present invention is to prevent, even under the conditions where the host computer frequently takes accesses, the function as the hard disk emulator from lowering to a fact that the hard disk drive or non-volatile memory used as the cache memory is filled up with the cache data which has not yet been transferred to a main memory and remains recorded in the hard disk drive or non-volatile memory or owing to a fact that the work memory is filled up with the address information.

To achieve the second object, the present invention is adapted such that said hard disk drive or non-volatile memory includes a fixed cache area for temporarily recording therein data at successive emulation addresses including emulation addresses frequently accessed, and a normal cache area for temporarily properly recording therein data other than said data at cache addresses where no data has been written.

Further, the present invention provides, for achieving the second object, a method of allocating the successive emulation addresses including the emulation addresses of the data temporarily recorded in said fixed cache area in said hard disk emulator wherein fixedly defined predetermined successive emulation addresses are allocated as said successive emulation addresses of the data temporarily recorded in said fixed cache area.

Still further, the present invention provides, for achieving the second object, a method of allocating the successive emulation addresses including the emulation addresses of the data temporarily recorded in said fixed cache area in said hard disk emulator wherein access frequency for each emulation address of data accessed by said host computer is estimated and successive emulation addresses including at least emulation addresses of high access frequency are allocated as the successive emulation addresses of the data temporarily recorded in said fixed cache area.

Yet still further, the present invention provides, for achieving the second object, a method of allocating the successive emulation addresses including the emulation addresses of the data temporarily recorded in said fixed cache area in said hard disk emulator wherein memory capacity of the fixed cache area of said hard disk drive or non-volatile memory used as a cache area upon the emulation is made greater than that of an area of said optical disk drive in which data is actually recorded and all emulation addresses corresponding to the area of said optical disk drive in which data is actually recorded are allocated as the successive emulation addresses of the data temporarily recorded in said fixed cache area.

As describeb previously, if there is brought about the situation where the host computer frequently takes accesses, the memory capacity of the hard disk drive or non-volatile memory (data cache unit) used as the cache memory is filled up or the work memory for recording therein the address information is filled up to lower the function as the hard disk emulator.

For solving such relatively exceptional conditions, the present invention constructs the cache area in the data cache unit, i.e., the hard disk drive or non-volatile memory with two types of cache area: a normal cache area and a fixed cache area.

With the normal cache area, data accessed by the host computer is properly temporarily recorded at addresses in the hard disk drive where no data has been written.

Accordingly, for utilizing such a normal cache area, it is necessary to previously record the address information in the work memory and the like.

The hard disk emulator in the present invention is operable conformably to interface specifications in conformity with the specifications of an arbitrary hard disk drive.

More specifically, any access by the host computer for recording into and reading from the hard disk emulator conforms to the specifications of a hard disk drive to be emulated.

Upon the accessing by the host computer, addressing of accessed data to the hard disk emulator also conforms to the specifications of a hard disk drive to be emulated.

Hereinafter, such an address addressed by the host computer is referred to as an emulation address.

For such emulation addresses, there are considered ones addressed taking a predetermined byte number block as a unit irrespective of track numbers, cylinder numbers, and sector numbers, etc., i.e., one addressed following the serial numbers of all blocks of predetermined byte numbers, and ones addressed supposing a general hard disk drive and combining varieties of address values such as track numbers, cylinder numbers, and sector numbers, etc., and other ones similarly addressed. Those emulation addresses conform to the specifications of hard disk drive to be emulated and are not limited by the present invention.

Also, the optical disk drive as a main memory has a predetermined addressing format even though physical formats of information recording media are with spiral ones or with a plurality of concentric tracks.

Hereinafter, any address addressed upon accessing data in the optical disk drive is referred to as an optical disk address.

Emulation addresses and optical disk addresses are defined in one to one correspondence and so addresses of the optical disk drive are also assumed to be the emulation addresses for brevity.

Further, the hard disk drive or non-volatile memory as the data cache unit, also has a predetermined format of addressing for accessing data therein.

Hereinafter, any address addressed upon accessing data in such a data cache unit is referred to as a cache address.

In data transfer between the normal cache area in the data cache unit and the host computer and data transfer between the normal cache area and the optical disk drive, correspondence between the cache addresses and the emulation addresses is provided in accordance with address information having been recorded in the work memory and the like.

Such address information used upon accessing the data cache unit forms a correspondence table between the cache addresses and the emulation addresses, i.e., a cache address table.

On the other hand, the fixed cache area, one of the features of the present invention, provided in the data cache unit together with the normal cache area is one for temporarily recording data at the successive emulation addresses including the emulation addresses frequently accessed.

Further, the cache addresses in the fixed cache area and the successive emulation addresses allocated thereto are defined under one to one correspondence.

Accessing such a fixed cache area does not require the address information required upon accessing the foregoing normal cache area.

Further, even though the host computer frequently records data at emulation addresses allocated to the fixed cache area, data recording to corresponding cache addresses in the fixed cache area is done simply by a predetermined number of times.

More specifically, if such a fixed cache area is available, there can be avoided a fear that data is not yet transferred to a main memory and hence the cache area is filled up with data remaining recorded therein when the normal cache area is employed, or a fear that the work area is filled up with the address information owing to the use of the normal cache area.

The present invention can thus solve, with the provision of the fixed cache area, the fear that a data cache unit is filled up with data as a result of the data being not transferred to the main memory or the fear that the work memory is filled up with address information to result in lowering of the function as the hard disk emulator, even when the host computer takes frequent accesses.

Herein, it should be noticed that the present invention does not limit the memory capacity of the fixed cache area, and the ratio of the memory capacity of the fixed cache area to that of the optical disk drive as a main memory, and the method of allocating the successive emulation addresses to the fixed cache area, i.e., the fixed cache area allocating method in the hard disk emulator.

In what follows, the method of allocating the fixed cache area in the hard disk emulator usable in the present invention will be exemplarily described.

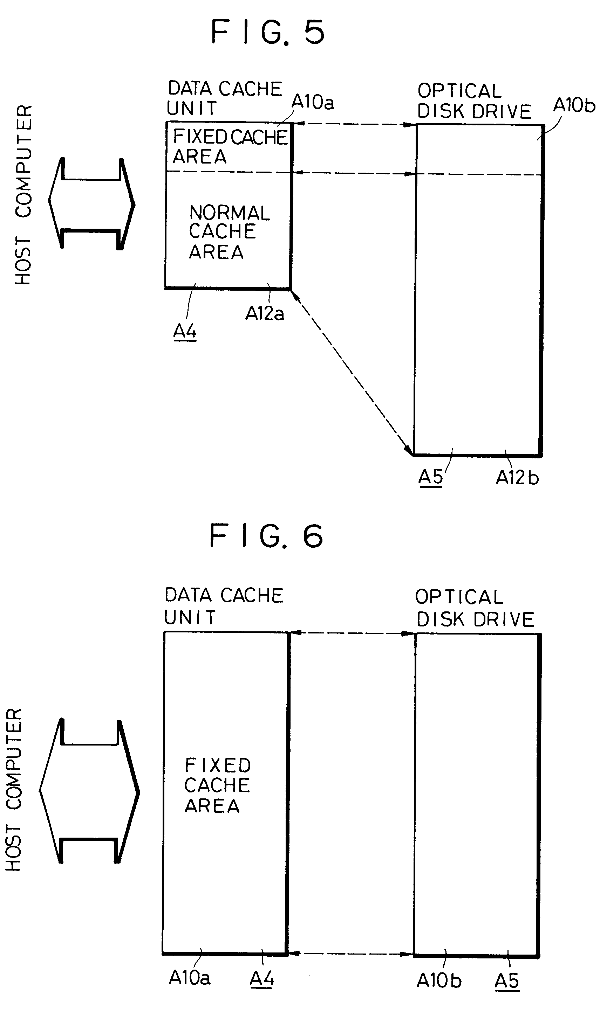

Fig. 5 is a diagram including a memory map indicative of first and second examples of the fixed cache area allocating method of the present invention.

In the figure, a symbol A5 denotes the whole memory capacity area of the optical disk drive as a main memory. A symbol A4 denotes the whole cache area of the data cache unit as the hard disk drive or non-volatile memory.

The whole cache area A4 of the data cache unit is divided to a fixed cache area A10a and a normal cache area A12a. The fixed cache area A10a is an area for temporarily recording data of successive emulation addresses including emulation addresses frequently accessed. The normal cache area A12A is an area for properly temporarily recording data other than an address region recorded in the fixed cache area A10a in the normal cache area A12a at cache addresses of the same where no data has been written.

On the other hand, the whole memory capacity area 5A of the optical disk drive is divided to a fixed cache area allocation area A10b and a normal cache area allocation area A12b. The fixed cache area allocation area A10b is an area allocated to the fixed cache area A10a such that the fixed cache area A10a is employed upon caching data. Memory capacity of the fixed cache area allocation area A10b is defined to be the same as that of the fixed cache area A10a. Individual addresses of the fixed cache area allocation area A10b and those of the fixed cache area A10a are in one to one correspondence, and hence correspondence between addresses of the one area and corresponding addresses of the other area can uniquely and promptly be estimated.

The normal cache area allocation area A12b is an area allocated to the normal cache area A12a such that the normal cache area A12a is usable upon caching data. Memory capacity of the normal cache area A12a used for caching data in the area A12b is less than that of the normal cache area allocation area A12b. This is because there is properly employed, upon caching data, cache addresses of the normal cache area A12a where no data has been written, and this shows the memory capacity of the data cache device can effectively be utilized.

Herein, in the first example of the fixed cache area allocating method of the present invention the fixed cache area allocation area 10b allocated to the fixed cache area A10a provides fixedly defined predetermined successive emulation addresses, as illustrated in Fig. 5.

Data in the fixed cache area allocation area A10b in the first example of the fixed cache area allocating method of the present invention is data in an area including successive emulation addresses corresponding to successive emulation addresses including emulation addresses of data accessed frequently, such for example as OS (operating system) management information and the like, whatever a running application program is.

Further, OS management information associated with file management on the optical disk drive in the foregoing OS management information is usually to be recorded in the optical disk drive whole memory capacity area A5, and information concerning such file management is data frequently accessed whatever a running application program, and so it is effective to allocate the fixed cache area A10a so as to include such data.

Further, in the second example of the fixed cache area allocating method of the present invention, the fixed cache area allocation area A10b is not fixedly allocated in the optical disk drive whole memory capacity area A5 as illustrated in Fig. 5. More specifically, the fixed cache area allocation area A10b in the second example of the fixed cache area allocating method is such that access frequency for each emulation address of data accessed by the host computer is estimated and successive emulation addresses including at least high access frequency emulation addresses are allocated to the fixed cache area A10a.

The second example of the fixed cache area allocating method is useful in a case where access frequencies of data accessed by the host computer with a running application program are greatly different among the emulation addressed, and so on, for example.

In the case where access frequencies are greatly different among the emulation addresses as described above, the throughput of the hard disk emulator can be improved by allocating successive emulation addresses including high access frequency emulation addresses to the fixed cache area allocation area A10b.

Fig. 6 is a memory map illustrating a third example of the fixed cache area allocating method of the present invention. In Fig. 6, symbols A4, A5, A10a and A10b are identical to those illustrated in Fig. 5. In Fig. 6, memory capacity of the data cache unit whole cache area A4 is the same as that of the whole memory capacity area of the optical disk drive as the main memory. Further, the whole of the data cache unit while cache area A4 is the fixed cache area A10a. Accordingly, the whole of the optical disk drive whole memory capacity area A5 is also the fixed cache area allocation area A10b.

In accordance with the third example of the fixed cache area allocating method, data in the data cache unit can thus be accessed without using any address information and the like, whatever emulation addresses of data accessed by the host computer are. Further, there is eliminated a problem that data which are not yet transferred to the optical disk drive as the main memory and remain recorded in the data cache unit are increased with which data the data cache unit is finally filled up, even though accesses by the host computer are frequent, and whatever emulation addresses of the data accessed at that time are. In the third example, furthermore, it is unnecessary to record the address information in the work memory and the like, and hence no problem is existent that such a work memory is filled up with the address information under the situation that accesses are frequently produced from the host computer.

The present invention is further adapted, for achieving the foregoing second object, such that interface specifications conforming to predetermined hard disk drive specification are emulated using an optical disk drive as a main memory and a hard disk drive or non-volatile memory having a cache area for temporarily recording data accessed by a host computer properly utilizing cache addresses where no data has been written, and a plurality of pieces of address information which are to be written in a cache address table upon said emulation or which have been written in the same are compared with each other to determine whether or not respective cache data corresponding to the respective pieces of the address information can be integrated with each other in their state where they have been written in said cache area, and further if they are determined to be integrable at least a plurality of corresponding pieces of the address information are integrated.

Said determination on whether or not respective cache data can be integrated, can be determined from whether or not the pieces of the address information are continuous in their state where they have been written in said cache area, and if they are determined to have been continuous, then at least a plurality of corresponding pieces of the address information are concatenated to achieve the second object.

Or said determination on whether or not respective cache data can be integrated, can be determined from whether or not address information in certain cache data includes address information of cache data recorded therebefore, and if it is determined to include the prior recorded address information, then the certain cache data is made valid to include the prior recorded address information to achieve the second object.

More specifically, the present invention puts in order address information recorded in the work memory for dealing with also relatively exceptional conditions that there frequently occur accesses of a request from the host computer of recording data and of a request from the same of regenerating data.

Further, in accordance with the present invention, upon the address information recorded in the work memory being put in order, it is possible according to circumstances to reduce data in the cache area of the data cache unit.

Thus, in accordance with the present invention, the problem can be prevented that the work memory is filled up with the address information therein, even under the conditions where there are frequently produced accesses from the host computer. Further, it can also be prevented according to circumstances that recording capacity of the data cache unit is filled up.

In what follows, an address integrating method in the hard disk emulater according to the present invention will be described. The judgement of the present invention on whether or not cache data corresponding to a plurality of pieces of address information can be integrated with each other even under their state where they have been written in the cache area is achieved by comparing those pieces of the address information.

Herein, the present invention does not limit concrete conditions of the judgement on whether or not such a plurality of pieces of address information can be integrated by comparing those pieces of the address information with each other or concrete processing details corresponding to said judgement.

Hereinafter, such judgement of the present invention on whether or not pieces of the address information can be integrated and a predetermined processing following the judgement are referred to an address information integrating processing.

In the following, a concrete example of the address information integrating processing of the present invention will be described.

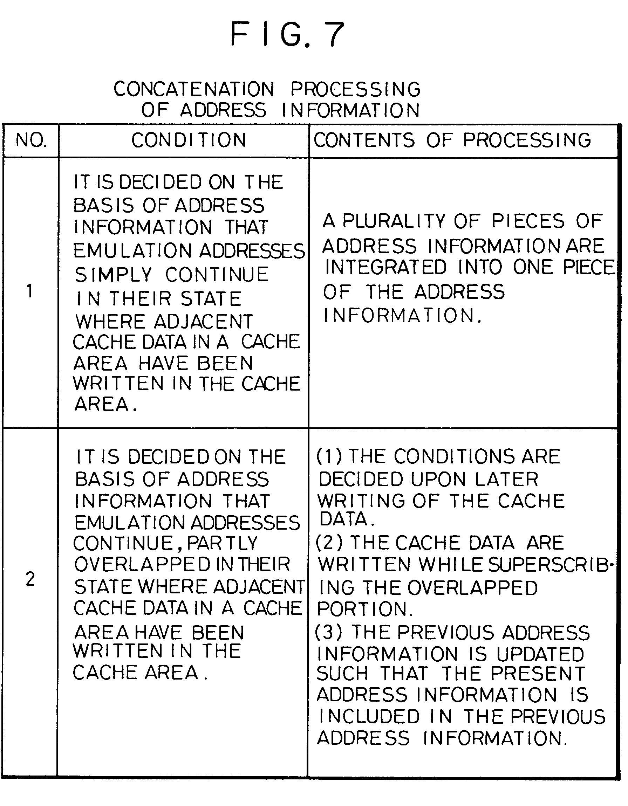

Fig. 7 is a diagram illustrating a concatenation processing of the address information, an example of the address information integrating processing of the present invention. In Fig. 7, there are indicated in order from the left column, numbers (No.) for explanation, conditions by which associated items are processed, and details of the processings of the associated items.

The concatenation processing of the address information illustrated in Fig. 7 is to concatenate different pieces of address information in the case where adjacent cache data corresponding to those pieces of the address information are continuous in the state where they have been written in a cache area of the data cache unit as the hard disk drive or non-volatile memory.

In No. 1 of the Fig. 7, a plurality of pieces of address information corresponding to adjacent cache data in a cache area are united to one piece of the address information in the case where the adjacent cache data in the cache area are decided to be simply continuous in the state where the adjacent cache data have been written in the cache area based upon address information of a cache address table recorded in the work memory.

More specifically, cache addresses of the address information corresponding to the adjacent cache data in the cache area are continuous because of the cache data being adjacent in the cache area. Accordingly, provided such cache data adjacent in the cache area are continuous also with respect to the emulation addresses, the pieces of the address information of those cache data can be united to one piece of the address information.

In No. 2 of Fig. 7, provided the emulation addresses are decided to be continuous, partly overlapped upon writing cache data in the cache area anew and in the case where cache data getting to be adjacent in the cache area by writing, the emulation addresses get to be simply continuous in the case where they have been written likewise No. 1 by writing the cache data so as to overwrite an overlapped portion of the cache data.

Hereby, also in No. 2 of Fig. 7, the pieces of the address information of the adjacent cache data can be united to one piece of the address information likewise No. 1.

Previous address information is therefore updated after writing of present cache data is terminated such that the present address information is included in the previous address information.

In accordance with the concatenation processing in No. 2 in Fig. 7, capacity of the cache data recorded in the cache area can be reduced. Namely, a fraction of capacity of an overlapped portion of the previous cache data with the present cache data can be reduced. Further, the total number of the address information in the work memory can also be reduced.

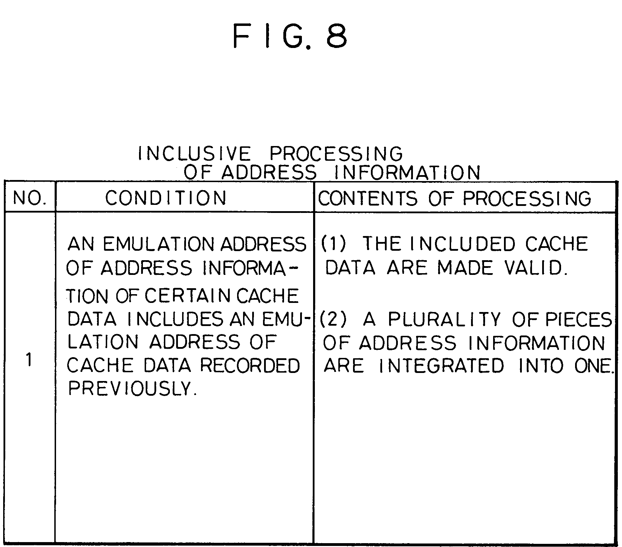

Fig. 8 is a diagram illustrating inclusing processing of address information, an example of the integrating processing of address information. Also in Fig. 8, there are indicated likewise Fig. 7, in order from the left, numbers Nos. for explanation, conditions by which associated items are processed, and details of the processings of the associated items.

In No. 1 in Fig. 8, the conditions are whether or not address information having been recorded in the work memory corresponding to cache data having been recorded in the cache area of a data cache unit as the hard disk drive or non-volatile memory involves address information of the other cache data recorded before said cache data was recorded.

Provided emulation addresses of address information of certain cache data involve emulation addresses of cache data recorded before the former cache data is recorded, associated emulation addresses of the optical disk drive as a main memory can be updated to the newest data only with the involving (newer) cache data. Accordingly, when the No. 1 conditions hold, the involving (newer) cache data is made valid. Further, when the No. 1 conditions hold, the involved (older) cache data is unnecessary and so the address information corresponding to the unnecessary cache data is also unnecessary. The unnecessary address information is thus abandoned and a plurality of pieces of the address information are united to one piece of the same.

It should be noted that, upon any data being recorded in a disk as a recording medium of the optical disk drive, writing of the data in the disk as the recording medium at a predetermined address of the same may sometimes be impossible owing to any trouble concern the disk as the recording medium. In such a case exchange processing is usually effected in the optical disk drive, but there may be caused problem that an exchange region is filled up although rarely or the optical disk drive suffers from any error in itself, in which case the writing in a disk of the optical disk drive at a predetermined address fails to normarily terminate.

In the optical disk drive which does not cache data, even if such recording failure occurs upon recording therein data from the host computer, the optical disk drive can relatively easily deal with such failure. For example, once any recording failure occurs and error termination information is transferred to the host computer, data not recorded could be recorded by appointing another address in a disk as a recording medium.

However, provided there occur any cache failure in the optical disk drive which caches data, such failure is difficult to be dealt with.

The reason is for example that once such recording failure occurs while a big volume of cache data is recorded in a data cache unit, termination information of the host computer has been set at the time recording into the data cache unit. Cache data having recorded in the data cache unit is incapable of being processed by a typical host computer.

The present invention, in view of a theme of further improving the technique on the optical disk drive which effects data caching such as hard disk emulator, etc., is to provide as a third object a data writing normal termination detecting method in an optical disk drive capable of more effectively clearing with the aforementioned recording failure.

To achieve the third object, the present invention is adapted such that upon writing data into the optical disk drive as a main memory, data caching is effected with use of a hard disk drive or non-volatile memory, and, even when there is no need of immediately writing data into the optical disk drive by the data caching, tentative accessing to the optical disk drive is effected in conformity with the address of the data accessed by the host computer to decide normal termination on the data writing from the host computer based upon the normal termination of the foregoing data caching and the normal termination of the foregoing tentative accessing.

The third object is further achieved by parallely executing the foregoing temporal accessing.

In accordance with the present invention, for further effectively dealing with the recording failure in the optical disk drive which effects the data caching, the tentative accessing to the optical disk drive is conducted in conformity with the address of data accessed by the host computer by the data caching even when there is no need of immediately writing data in the optical disk drive upon the data being written from the host computer.

In the present invention, the normal termination decision on the data writing from the host computer is effected based upon normal termination where written data from the host computer is written into the data cache unit and upon the foregoing tentative accessing. The normal termination decision is transferred to the host computer.

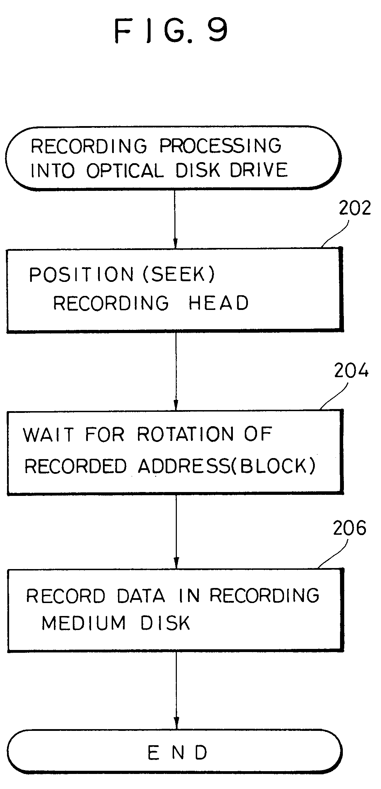

Referring now to Fig. 9, there is illustrated as a flowchart a processing of recording data into a disk as a recording medium in a general optical disk drive. In Fig. 9, there is positioned (seeked) a recording head radially of disk as a recording medium in Step 202. In Step 204, after the positioning in Step 202 an address (block) formatted physically on the disk as a recording medium is waited for rotation. In Step 206, predetermined data is recorded at the address (block) which was waited for its rotation in Step 204. Further, for recording data in succession of many addresses (block) the processing in Step 206 is successively effected rotating the disk.

There is known among optical disk drives one for the positioning of the recording head in Step 202 in which the position of the recording head is detected reading out data (information, etc., concerning an address such as a block number) recorded in the disk as a recording medium, on the basis of the read data.

Further, in most of optical disk drives, at least upon the waiting of the recorded address (block) for its rotation in the foregoing Step 204, predetermined data written in a disk as a recording medium (information concerning an address such as a block number) is read out, and on the basis of the read data there is detected an address (block) of data passing through a recording head following the rotation.

The present invention is presented noticing such positioning detection and address (bloch) detection. More specifically, the present inventor has found for the present invention that provided, upon recording data in a disk as a recording medium, there is normarily effected the recording head positioning detection concerning an address of the recorded data, probability is high of actual data writing thereafter being normarily executed. The present invention is otherwise presented by finding that provided, upon data writing into a disk as a recording medium, there is normarily effected address (block) detection following an address of the recorded data, probability is high of actual data writing thereafter being normarily executed.

It is thus judged in the present invention by tentative accessing as the foregoing positioning detection and the foregoing address (block) detection whether or not prior to actual data recording into a disk as a recording mediun of the optical disk drive the data writing can normarily be terminated.

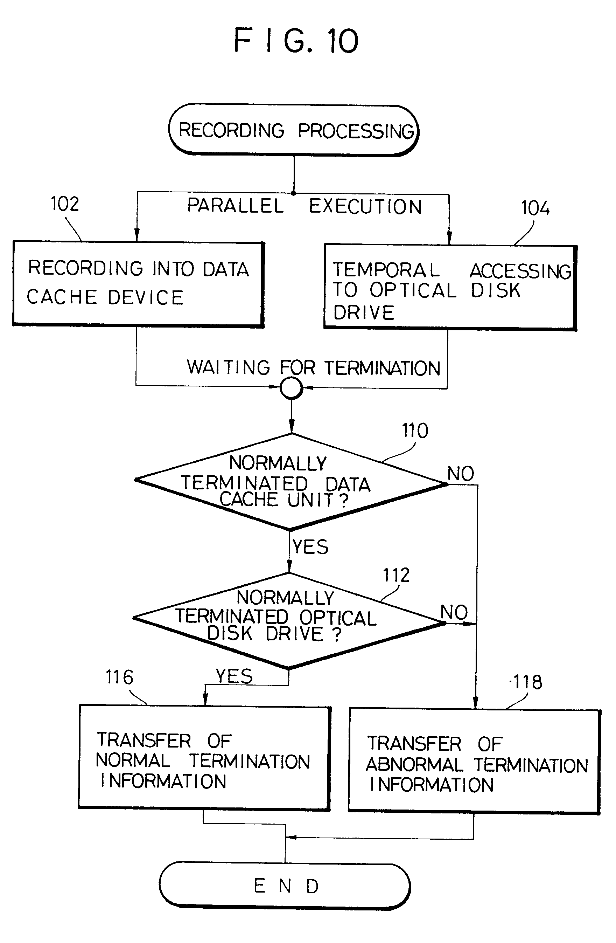

Fig. 10 is a flowchart illustrating the subject of the present invention.

The whole recording processing illustrated in Fig. 10 is a recording processing by the optical disk drive drive which effects data caching, executed in conformity with data writing from a host computer. Accordingly, the recording processing illustrated in Fig. 10 is started with the reception of a command from the host computer. Once the recording processing of Fig. 10 is executed, there are parallely executed both recording processing into a data cache unit in Step 102 and temporal accessing to the optical disk drive in Step 104.

Step 102 presents the processing in which there is recorded write data received from the host computer in the data cache unit provided for compensating for the aforementioned shortcoming of the optical disk drive such as low throughput and the like. The Step 104 presents the temporal accessing in which it is previously judged whether or not recording which is to be effected later, of data received from the host computer and recorded in the data cache unit is normarily effected.

The temporal accessing, which is the foregoing positioning detection and the address (bloch) detection, may be a processing up to the middle of the recording processing by the optical disk drive illustrated in Fig. 9, and is not limited by the present invention. The tentative processing may for example be a processing in the processing illustrated by the flowchart of Fig. 9, in which data recording into a disk as a recording medium in Step 206 is effected halfway.

Thus, in the case where the processing up to Step 206 is effected as the temporal access as long as the time allows, even if data sent from the host computer as write data is of a big volume, the time for the temporal accessing causes no problem and the accuracy of the data writing normal termination judgement with the temporal access processing can be improved.

In Fig. 10, in steps 110 and 112, it is judged whether or not data writing from the host computer is normarily terminated. The decision on normal termination of data writing is to decide the data writing from the host computer as its being normarily terminated when a condition "the data cache unit is normarily terminated" holds and a condition "the optical disk drive is normarily terminated" holds. Accordingly, if the decision is "Y" in Step 110 and further "Y" in Step 112, then the operation advances to Step 116 in which normal termination information is transferred to the host computer.

On the contrary, if the decision is "N" in Step 110 or "N" in Step 112, then the operation advances to Step 118 in which abnormal termination information is transferred to the host computer. After the processing in Step 116 or the processing in Step 118 is executed, the whole recording processing illustrated in fig. 10 is terminated.

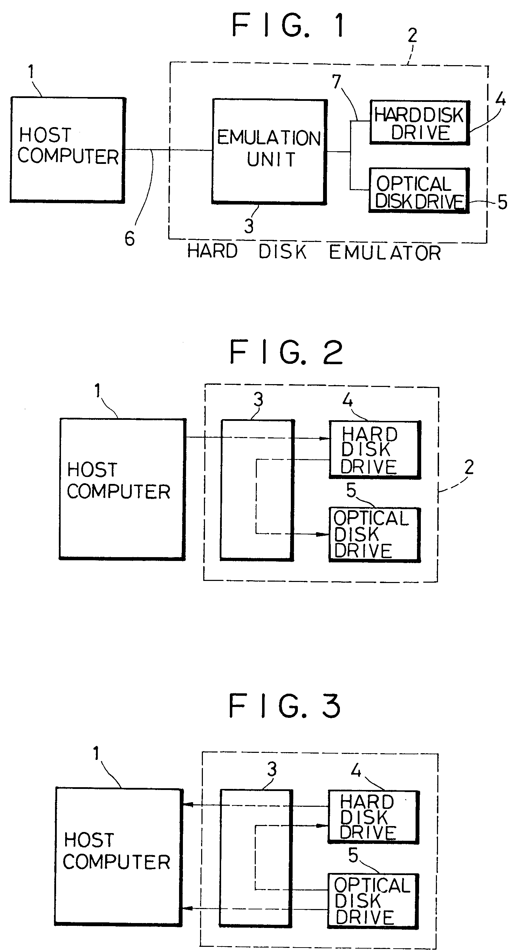

In accordance with the present invention, as described above, it is possible for data writing from the host computer into the optical disk drive which effects data caching to previously decide on whether or not data writing into the optical disk drive effected later is normarily terminated by data caching even when immediate data writing into the optical disk drive is unnecessary, and hence any recording failure can effectively be dealt with. The foregoing recording processing described with Fig. 10 was to concurrently execute the recording processing into the data cache unit in Step 102 and the tentative access processing in the optical disk drive. Such parallel execution can shorten the total access time of the recording processing illustrated in fig. 1. The present invention is however not limited to the just-mentioned processing, in which the processing of Step 102 and the processing of Step 104 may partly parallely executed or those processings of Steps 102 and 104 may be executed in series, either effectively dealing with any recording failure.

The preferred embodiments will be described with reference to the drawings, wherein like elements have been denoted throughout the figures with like reference numerals, and wherein:

Fig. 1 is a block diagram illustrating the basic arrangement of an embodiment of a hard disk emulator according to the present invention;

Fig. 2 is a block diagram illustrating a data flow upon recording in the embodiment of Fig. 1;

Fig. 3 is a block diagram illustrating a data flow upon regeneration in the same;

fig. 4 is a block diagram illustrating a circuit configuration embodying an emulation unit being a component in the embodiment of Fig. 1;

Fig. 5 is a diagram including memory maps each illustrating first and second examples of a fixed cache area allocating method according to the present invention;

Fig. 6 is a diagram including a memory map illustrating a third example of the fixed cache area allocating method according to the present invention;

Fig. 7 is a diagram illustrating an address information concatenation processing as an example of an address information integrating method according to the present invention;

Fig. 8 is a diagram illustrating an address information inclusive processing as an example of the address information integrating method according to the present invention;

Fig. 9 is a flowchart illustrating a data recording processing into a disk as a recording medium in a general optical disk drive;

Fig. 10 is a flowchart illustrating the principle of a data writing normal termination decision method according to the present invention;

Fig. 11 is a map of the whole memory capacity area of an optical disk drive of the aforementioned embodiment;

Fig. 12 is a map of the whole cache area of a hard disk drive of the aforementioned embodiment;

Fig. 13 is a diagram illustrating a cache address table in the present embodiment in which address information is recorded;

Fig. 14 is a diagram illustrating a cache address table in which address information where the address information of Fig. 13 integrated is recorded;

Fig. 15 is a diagram illustrating a cache address table where address information of the present embodiment is recorded; and

Fig. 16 is a diagram illustrating a cache address table in which address information where the address information of Fig. 15 is recorded.

In what follows, an embodiment of the present invention will be described with reference to the accompaying drawings.

Fig. 1 shows the basic configuration of an embodiment of a hard disk emuelator according to the present invention.

A host computer 1 records data in a hard disk emulator 2 through an interface bus 6 and regenerates the data from the hard disk emulator 2. The hard disk emulator 2 comprises an emulation unit 3, a hard disk drive 4, and an optical disk drive 5, all being connected to each other through an interface bus 7. The emulation unit 3 controls the whole of the hard disk emulator 2, i.e., controls emulation as a hard disk, data transfer between the hard disk drive 4 and the optical disk drive 5, and data transfer between it and the host computer 1. The hard disk drive 4 is used as a non-volatile cache memory (data cache unit) and has its capacity less than that of the hard disk drive as emulation target. The optical disk drive 5 is exchangeable in its disk serving as a recording medium and rewritable for emulation of a hard disk.

Fig. 2 shows a data flow upon recording in the above embodiment.

Data sent from the host computer 1 is recorded in the hard disk drive 4 through the emulation unit 3. Once a recording command sequence from the host computer 1 is terminated, the data recorded in the hard disk drive 4 is transferred to the optical disk drive 5. The transfer is effected whilst the host computer 1 does not actuate the hard disk emulator 2 for starting of the same, i.e., effected as a background processing of the hard disk emulator 2. Provided the host computer 1 actuates the hard disk emulator 2 during the background processing, the background processing is immediately interrupted and the started command sequence is executed, and further after the started command sequence is terminated, remaining background processing is again executed.

Fig. 3 shows a data flow upon regeneration in the above embodiment.

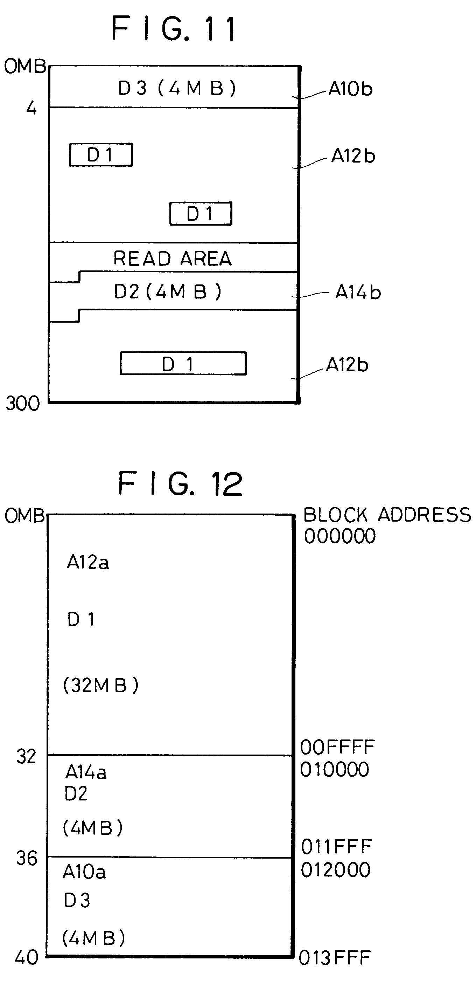

Provided data appointed from the host computer 1 is existent in the hard disk drive 4, the data is transferred from the hard disk drive 4 to the host computer 1 through the emulation unit 3. In the background processing upon regeneration, provided data to be regenerated is sequential file data described later with reference to Figs. 11 and 12, data in an area located next to the data to be regenerated is transferred from the optical disk drive 5 to the hard disk drive 4. Namely, prefetching is done. Accesses from the host computer 1 to an auxiliary memory are generally effected sequentially in many cases, and hence there is existent a high possibility that after certain data is accessed, data located next to the tail of the data is accessed. The just-mentioned prefetching effected in the present background processing is thus effective.

Provided data appointed from the host computer 1 is not existent in the hard disk drive 4, the data is transferred from the optical disk drive 5 through the emulation unit 3.

Since the hard disk drive 4 is a memory capable of random accesses, seeking time may not sometimes be ignorable in view of the performance of the whole system. The seeking time taken by the present hard disk drive is about 20 to 50 millisecond including the rotation waiting time, while the time required for recording per one sector is 1 millisecond or less in many occasions. With random accceses frequently occurring, although actual recording only takes about several millisecond, the seeking requires several tens millisecond, and hence the time required is (several tens millisecond) + (several millisecond) viewed from the host computer 1. On the other hand, in the hard disk emulator 2 in the above embodiment, data, irrespective of those addresses appointed from the host computer 1, are stored sequentially in the hard disk drive 4 used as a cache memory, so that no seeking occur with the time required being only several millisecond viewed from the host computer 1.

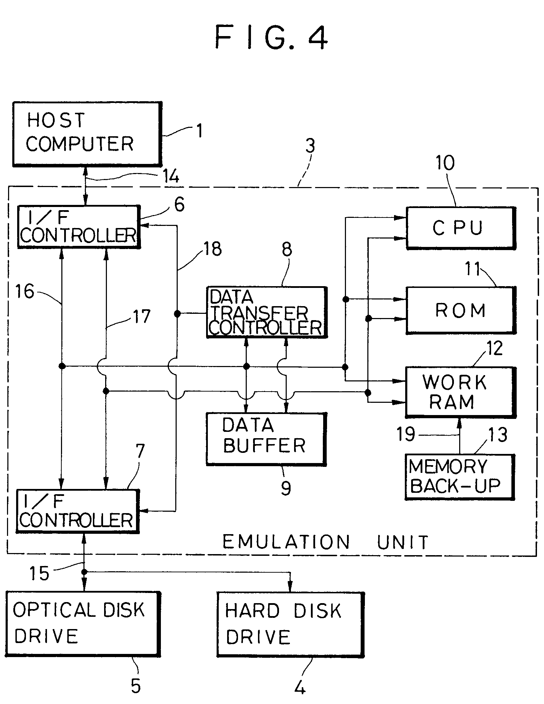

Fig. 4 shows a circuit configuration embodying the emulation unit 3 .

The emulation unit 3 includes an interface between it and the host computer 1 and an interface between the optical disk drive 5 and the hard disk drive 4, in which unit 3 respective interface protocols are controlled by a host computer side interface control circuit 6 and a memory device side interface control circuit 7. A data control circuit 8 controls data transfer between the host computer 1 and the memory device and data transfer between the optical disk drive 5 and the hard disk drive 4. The data buffer 9 is operable as a buffer memory upon those data transfers.

The entire control of the emulation unit 3 comprises a CPU 10 (central processing unit), a programming ROM (programming read only memory) 11, and a worh RAM (work random access memory) 12. The work RAM 12 is not only used as a general-purpose work area of the CPU 10 but also stores address information of data on the hard disk drive 4.

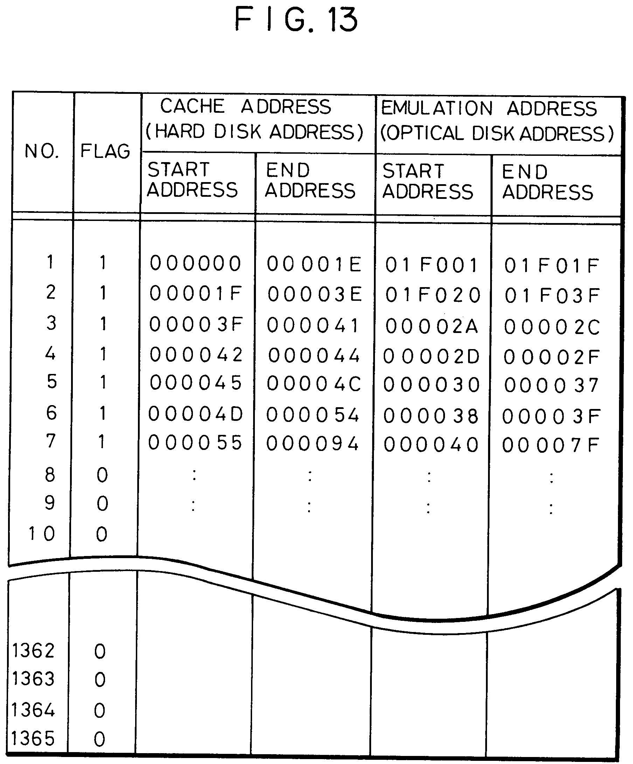

The address information is, as described with reference to Fig. 13, information indicative of a correspondence between the cache addresses (hard disk addresses) and the emulation addresses (assumed to be same as the optical disk addresses), which information is usually generated each time new data is recorded in the cache area.

Further, when an ordinary cache area is employed, the CPU 10 performs, on the basis of the just-mentioned address information, data transfer between the host computer and the hard disk drive 4 or performs the background processing between the optical disk drive 5 and the hard disk drive 4. Since the background processing is effected independently of the host computer 1, in order to prevent the address information from being erased even though a power supply is cut off before the background processing is terminated, there is provided a memory back-up 13 for the work RAM 12.

Herein, numeral 14 denotes an interface bus between the host computer 1 and the emulation unit 3, and 15 an interface bus between the emulation unit 3 and memory devices, i.e., the optical disk drive 5 and the hard disk drive 4. Respective blocks in the emulation unit 3 are interconnected through a data bus 16 and an address bus 17. Data transfer between the host computer 1 and the memory devices and between the optical disk drive 5 and the hard disk drive 4 are effected by a data transfer control signal 18 through the data bus 16. The data transfers are controlled by the data transfer control signal 18 such as transfer request signals and acknowledge signals issued from the data transfer control circuit 8 because such data transfer through the CPU 10 lowers a transfer speed. Numeral 19 denotes a back-up power supply for the work RAM 12 from the memory back-up 13.

In the following, operation of the present embodiment will be described.

The present embodiment includes a general cache area (referred to as "normal cache area") to whiich the present invention is applied, and a fixed cache area for temporarily recording data of successive emulation addresses including emulation addresses to which accesses are frequently taken. The cache addresses in the fixed cache area and the successive emulation addresses allocated to the former are under one to one correspondence. For accessing such a fixed cache area, there is no need of the address information needed upon accessing the normal cache area described previously. Further, even though the host computer frequently records in the fixed cache area at the emulation addresses allocated to the same, data are only recorded at corresponding cache addresses in the fixed cache area by a given number of times. In other words, such use of the fixed cache area eliminates a fear with use of only the normal cache area that the normal cache area is filled up with data not transferred to the main memory and remaining recorded with normal cache area and a fear that the work memory for working normal cache area is filled up with address information therein.

As described above, in the present embodiment provided with the fixed cache area the fear that data in the data cache unit is filled up and the fear that the work memory is filled up with address information can be eliminated even when frequent accesses are generated from the host computer.

Fig. 11 shows a map of the entire memory capacity area of the optical disk drive 5 in the foregoing embodiment.

In Fig. 11, symbols A10b, A12b and A14b denote a fixed cache area allocating area, a normal cache area allocating area, and a prefetch area allocating area, respectively. These fixed cache area allocating area A10b, normal cache area allocating area A12b, and a prefetch area allocating area 14b are allocated corresponding to a fixed cache area A10a, a normal cache area A12a, and a prefetch area A14a described later, respectively.

As illustrated in Fig. 11, the whole memory capacity of the optical disk drive 5 used in the present embodiment is of 300 MB (mega bytes). There are recorded data concerning OS management information in the top 4 MB of the whole memory capacity area of the optical disk drive 5. The optical disk drive 5 in the present embodiment is exchangeable in its recording medium where data are actually recorded. Accordingly, OS management information data D3 on the top 4 MB of the whole memory capacity area mainly concerns file management of data recorded in a recording medium mounted on the optical disk drive 5. The OS management information data D3 is frequently accessed by the host computer. As denoted by the symbol A10b in Fig. 11, the OS management information data D3 is a fixed cache area allocated area.

Also in Fig. 11,, an area denoted by the symbol A12b is a normal cache area allocated area.

A 4 MB area denoted by the symbol A14b is a prefetch area allocated area. There is recorded in the prefetch area allocated area A14b sequential file data D2 to which accesses are sequentially taken in the order of addresses

Further, a symbol DI in the normal cache area allocated area A12b in Fig. 11 indicates hot data which is developed in the normal cache area A12a of the hard disk drive 4 as described later with reference to Fig. 12.

Fig. 12 shows a map of the whole cache area of the hard disk drive 4 in the above embodiment.

In Fig. 12, symbols A10a, A12a, and A14a denote a fixed cache area, a normal cache area, and a prefetch area, respectively. Further, symbols D1, D2, and D3 are identical to those illustrated in Fig. 11.

As illustrated in Fig. 12, the whole memory capacity of the hard disk drive 4 is of 40 MB. The whole memory capacity of the hard disk drive 4 provides a cache area which comprises a normal cache area A12a, prefetch area A14a, and a fixed cache area A10a.

The normal cache area A12a has 32 MB allocated from the top of the whole cache area. Data recorded in the normal cache area A12a is hereinafter referred to as hot data D1.

The prefetch area A14a is a 4 MB area successively located next to the 32 MB normal cache area A12a. In the case where upon an access being taken by the host computer, data to be accessed is the sequential file data D2 recorded in the prefetch area allocated area A14b indicated Fig. 11, there is employed as a cache area the prefetch area A14b indicated in Fig. 12. When the access taken by the host computer is to read the sequential file data D2, there is effected the prefetching by the background processing described previously with reference to Fig. 3.

The 4 MB fixed cache area A10a located next to the 4 MB prefetch area A14a is used for a data cache for the OS management information data D3 recorded in the fixed cache area allocated area A10b of Fig. 11. The memory capacity of the fixed cache area A10a of the hard disk drive 4 is the same as the 4 MB one of the foregoing fixed cache area allocated area A10b located at the top of the optical disk drive 5. Use of the fixed cache area A10a of the hard disk drive 4 for data caching allows a rapid processing without using address information.

Figs. 13 through 16 show cache address tables according to the present invention, in each of which address information is recorded, respectively.

Each of the cache address tables illustrated in Figs. 13 through 16 comprises numbers Nos., flags, cache addresses (hard disk addresses) each comprising a start address and an end address, and emulation addresses (the same as the optical disk addresses) each comprising a start address and an end address. In Figs. 13 through 16, the number Nos. indicate records of each cache address table, i.e., serial numbers of individual pieces of address information. As the numbers Nos. increase, data associated therewith is new. More specifically, in the case where specific address information is made invalid by an address information integrating processing described later, no new address information is written in a portion of the area which portion is made invalid, and pieces of the address information located on and after that portion are shifted in the direction where the number No. is decreased to fill that portion and thereafter new address information is written at the tail of that portion.

In figs. 13 through 16 illustrating the cache address tables, each "flag" indicates whether associated address information is valid or invalid. More specifically, if the flag is "1", then a cache address and an emulation address of associated address information are made valid. Such address information made valid as above indicates a correspondence between the cache address and emulation address of cache data in an associated cache area. On the contrary, if the flag is "0", then corresponding address information, i.e., a cache address and an emulation address are made invalid. Namely, with this flag being "0", associated address information is ignored whatever it is.

The cache address tables illustrated in Figs. 13 through 16 are useable for estimating a cache address (hard disk address) when the normal cache area A12a on the hard disk 4 is accessed in conformity with addressing upon being accessed by the host computer, i.e., in conforming with addressing by an emulation address.

The cache address tables are also useable upon estimating a correspondence between hard disk addresses and optical disk addresses during data transfer between the normal cache area A12a of the hard disk 4 and the normal cache area allocated area A12b of the optical disk drive 5, the data transfer being effected in the background processing. Further, in the present embodiment, the emulation address and the optical disk address correspond to one to one and are regarded to be the same.

In accordance with the present embodiment, as described above, a hard disk drive is useable as the data cache unit whereby a hard disk emulator compensating the shortcoming of the optical disk drive can be configured.

Furthermore, the hard disk emulator in accordance with the present embodiment includes on the hard disk drive the normal cache area and the fixed cache area, whereby even though frequent accesses occur by the host computer, there can be prevented the hard disk drive used as the data cache unit from being filled up with cache data remaining recorded in the hard disk drive without the cache data being transferred to the optical disk drive or the work memory is prevented from being filled up with the address information therein.

An address information intefragting method in a hard disk emulator in this embodiment will hereunder be described with reference to Figs. 13 to 16.

In the address information integrating method in a hard disk emulator in this embodiment, there are performed processing of respective items of concatenation processing of the said address information with reference to Fig. 7 and processing of respective items of inclusion processing of the said address information with reference to Fig. 8.

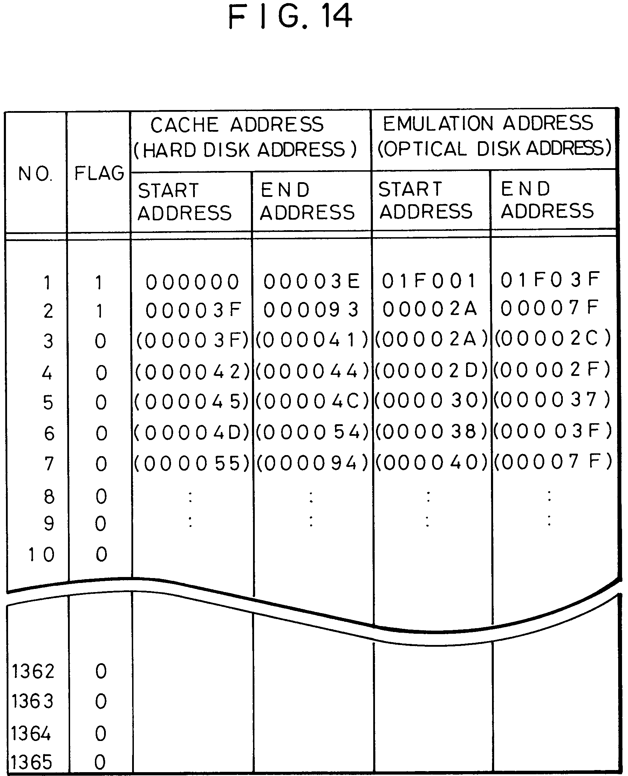

First, in Figs. 13 and 14, processing of No. 1 item of concatenation processing of the address information shown in Fig. 7 is performed.

In Fig. 13, the cache data shown by No. 1 address information whose cache addresses are from 000000 to 00001E and the cache data shown by No. 2 address information whose cache addresses are from 00001F to 00003E respectively have emulation addresses from 01F001 to 01F01F, or from 01F020 to 01F03F.

Namely, the cache data corresponding to No. 1 address information and the cache data corresponding to No. 2 address information are adjacent in their state written in the cache area of the hard disk drive, and their emulation addresses continue.

Similarly, respective cache data shown by No. 4 to No. 7 address information in Fig. 13 are adjacent in their state written in the cache area of the hard disk drive and continue. Namely, the respective cache data corresponding to No. 3 to No. 7 address information are written into a hard disk cache area in accordance with this numerical order, and the emulation addresses of those No. 3 to No. 7 cache data continue in this numerical order.

Accordingly, No. 1 and No. 2 address information shown in fig. 13 can be integrated into one piece of the address information in accordance with processing of No. 1 item of concatenation processing of the address information shown in Fig. 7. Similarly, the total five pieces of the address information from No. 3 to No. 7 can be integrated into one pieces of the address information.

A value obtained, upon completion of concatenation processing of the address information of the cache address table shown in Fig. 13 is written into the cache address table shown in Fig. 14.

Namely, No. 1 address information shown in Fig. 14 is the address information in which No. 1 address information and No. 2 address information as shown in Fig. 13 are integrated (concatenated) into one piece of the address information. Furthermore, No. 2 address information shown in Fig. 14 is the address information in which the total five pieces of the address information from No. 3 to No. 7 as shown in Fig. 13 are integrated (concatenated) into one piece of the address information.

Incidentally, the values of cache addresses and the values of emulation addresses which are written into the No. 3 to No. 7 address information as shown in Fig. 14 are equal to the values of cache addresses and the values of emulation addresses which are written into No. 3 to No. 7 address information as shown in Fig. 13, respectively, however, a flab is set at "0", whereby these values are invalid.

Integrating (concatenating) processing of the address information of the cache address table shown in Fig. 13 is performed as described above, the total seven pieces of the address information can be reduced to the total two pieces of the address information.

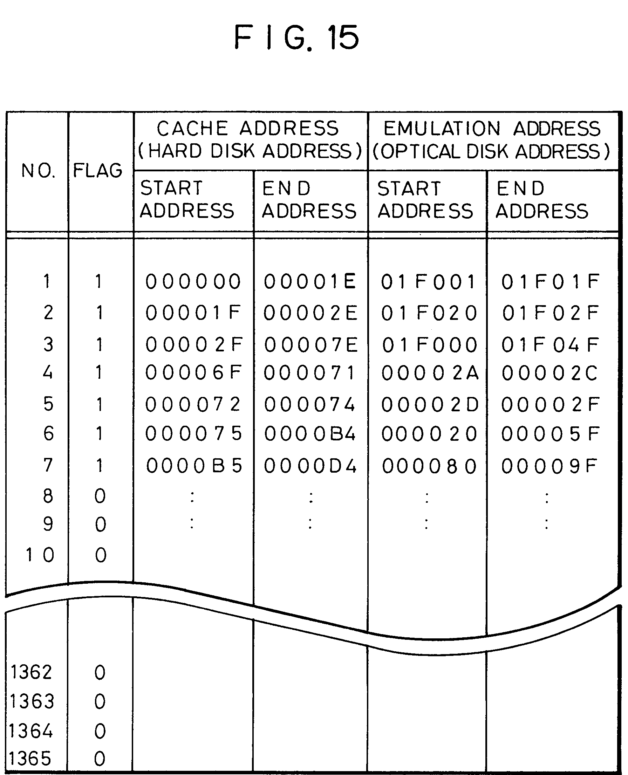

In Fig. 15 showing the cache address table in which the address information is written, the cache data corresponding to No. 3 address information, i.e., the cache data written into the cache addresses from 00002F to 00007E in the cache area are the data to be written into the emulation addresses from 01F000 to 01F04F, and are the data newer than the cache data corresponding to No. 1 address information or the cache data corresponding to No. 2 address information.

Accordingly, the emulation addresses of the cache data corresponding to the No. 3 address information include the respective emulation addresses of the cache data corresponding to No. 1 address information and of the cache data corresponding to No. 2 address information, both of which cache data are recorded prior to the cache data corresponding to the No. 3 address information. Therefore, the total three pieces of the addres information from No. 1 to No. 3 shown in Fig. 15 can be integrated (included) into one piece of the address information in accordance with the processing of No. 1 item of inclusion processing of the address information shown in Fig. 8.

Furthermore, the cache data corresponding to No. 6 address information shown in Fig. 15, i.e., the cache data whose emulation addresses are from 000020 to 00005F include the respective emulation addresses of the cache data corresponding to No. 4 address information and of the cache data corresponding to No. 5 address information, both of which cache data are recorded prior to the cache data corresponding to No. 6 address information.

Accordingly, the total three pieces of the address information from No. 4 to No. 6 can be integrated (included) into one piece of the address information in accordance with the processing of the No. 1 item of inclusion processing of the address information shown in Fig. 8.

Furthermore, in the state shown in Fig. 15, when new data whose emulation addresses are from 000090 to 0000AF are to be written into the normal cache area, these data are written into the cache area continuous to the cache addresses of No. 7 address information shown in Fig. 15.

The data to be written into the cache area anew, i.e., the cache data are adjacent the cache data corresponding to No. 7 address information shown in Fig. 15 in their state where they are written into the cache area.

Furthermore, since the cache data written into the cache area anew have the emulation addresses from 000090 to 0000AF, these cache data are partly overlapped with the emulatiorn addresses from 000080 to 00009F of the cache data corresponding to the No. 7 address information shown in Fig. 15. Namely, the both cache data are overlapped between the emulation addresses from 000090 to 00009F.

Accordingly, in writing the cache data into a new cache area as described above, it is concluded that the condition of No. 2 item of concatenation processing of the address information shown in Fig. 7 is established.

Accordingly, the cache data to be written in anew are written in such a manner that the portion corresponding to the overlapped portion from 000090 to 00009F of the emulation addresses of the cache data shown by no. 7 address information in Fig. 15 is superscribed. Namely, the cache data to be written in anew are written in the portion from 0000C5 to 0000E4 of the cache addresses. Furthermore, no. 7 address information shown in Fig. 15 and the address information of the cache data written in anew can be integrated (concatenated) into one piece of the address information.

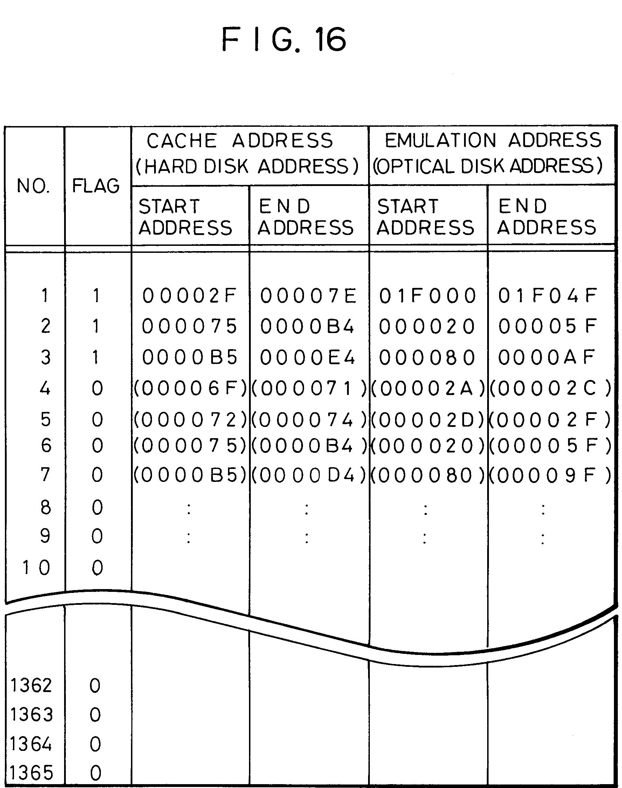

In the cache address table shown in Fig. 16, there is indicated a result obtained by integrating the address information of the cache address table shown in Fig. 15.

No. 1 address information in Fig. 16 is the address information obtained by integrating the total three pieces of the address information from No. 1 to No. 3 as shown in Fig. 15. Namely, No. 1 address information in Fig. 16 is the address information in which No. 1 address information and No. 2 address information as shown in Fig. 15 are included in No. 3 address information shown in Fig. 15 to be integrated together.

Furthermore, No. 2 address information shown in Fig. 16 is the address information in which the total three pieces of No. 4 to No. 6 address information shown in Fig. 15 are integrated into one piece of the address information. Namely, No. 1 address information shown in Fig. 16 is the address information in which No. 4 and No. 5 address information as shown in Fig. 15 are included in No. 6 address information shown in Fig. 15 to be integrated together.

Furthermore, No. 3 address information shown in Fig. 16 is the address information in which No. 7 address information shown in Fig. 15 and the address information of the cache data to be written in anew are united (concatenated) into one piece of the address information.

As shown in Fig. 16, in this embodiment, the total 7 + 1 pieces of the address information can be reduced to the total three pieces of the address information.

As described above, in this embodiment, such excellent effects can be achieved that the number of pieces of the address information in the work memory can be reduced, and, as the case may be, the memory capacity of the cache data to be written in anew can be reduced.

Incidentally, as described above, in this embodiment, the optical disk drive 5 as the main memory and the hard disk drive 4 used as the cache area during emulation are utilized, emulation is made in conformity with the specification of the hard disk drive which is emulated in response to accesses of writing and reading of data from the host computer.

Furthermore, in this embodiment, the hard disk drive is used as the data cache unit, whereby there is constructed a hard disk emulator to make up for the drawback of the optical disk drive.

further, in this embodiment, the said normal termination detecting method of data writing according to the present invention is performed with reference to Fig. 10.

By performing record processing as shown in Fig. 10, most of the failures in recording are previously detected, so that the problems relating to the treatment of occurrence of the said failures in recording can be reduced in number.

## Claims

1. A hard disk emulator (2) comprising: an optical disk drive (5) as a main memory, a hard disk drive (4) or non-volatile memory used as a cache memory together with said optical disk drive (5), and an emulation unit (3) located among a host computer (1), said optical disk drive (5), and said hard disk drive (4) or non-volatile memory to be operable in response to requests of writing and reading of data from the host computer (1), using said hard disk drive (4) or non-volatile memory as the cache memory.

2. A hard disk emulator according to claim 1 wherein said emulation unit (2) comprises
a data transfer control circuit (8) for controlling data transfer among said host computer (1), said optical disk drive (5), and said hard disk drive (4) or non-volatile memory,
a circuit (6, 7) for controlling interfacing between said host computer (1) and a disk drive (4, 5) side,
a CPU (10) for performing background processing between said hard disk drive (4) or non-volatile memory and said optical disk drive (5),
a work memory (12) mainly used as a general work area for said CPU (10),
a memory back-up (13) for the work memory (12), and a programming ROM (11).

3. A hard disk emulator according to claim 1 wherein said hard disk drive (4) or non-volatile memory includes a fixed cache area (A10a) for temporarily recording therein data at successive emulation addresses including emulation addresses frequently accessed and a normal cache area (A12a) for temporarily properly recording therein data other than said data at successive emulation addresses at cache addresses where no data has been written.

4. A hard disk emulator according to claim 3 wherein fixedly defined predetermined successive emulation addresses are allocated as the successive emulation addresses of the data temporarily recorded in said fixed cache area (A10a).

5. A hard disk emulator according to claim 3 wherein access frequency for each emulation address of data accessed by said host computer (1) is estimated, and successive emulation addresses including at least high access frequency emulation addresses are allocated as the successive emulation addresses of the data temporarily recorded in said fixed cache area (A10a).

6. A hard disk emulator according to claim 3 wherein memory capacity of the fixed cache area (A10a) of said hard disk drive (4) or non-volatile memory used as the cache area upon the emulation is defined to be more than the memory capacity of an area of said optical disk drive (5) in which data is actually recorded, and all emulation addresses corresponding to the area of said optical disk drive (5) in which data is actually recorded are allocated as the successive emulation addresses of the data temporarily recorded in said fixed cache area (A10a).

7. An address information integrating method in a hard disk emulator (2) comprising the steps of:
emulating interface specifications in conformity with predetermined hard disk drive (4) specification utilizing an optical disk drive (5) as a main memory and a hard disk drive (4) or non-volatile memory including a cache area for temporarily recording data accessed by a host computer (1) properly using cache addresses where no data has been written;
comparing with each other a plurality of pieces of address information which are or have been written in a cache address table upon said emulation; determining whether or not cache data corresponding to the pieces of the address information can be integrated with each other in their state where they have been written in said cache area; and
integrating at least a plurality of corresponding pieces of the address information if they are determined to be integrable.

8. An address information integrating method according to claim 7 wherein capability of integration is determined from whether or not the pieces of the address information are continuous in their state where they have been written in said cache area, and

if they are determined to have been continuous, then at least a plurality of corresponding pieces of the address information are concatenated.

9. An address information integrating method according to claim 7 wherein capability of integration is determined from whether or not address information in certain cache data includes therein address information of cache data recorded prior to the certain cache data, and
if the certain address information is determined to include the prior recorded address information, then the certain cache data is made valid to include the prior recorded address information as it is.

10. A normal termination detecting method of data writing in an optical disk drive (5) comprising the steps of:
caching data in a hard disk drive (4) or non-volatile memory upon writing the data in an optical disk drive (5) as a main memory from a host computer (1),
tentatively accessing, through said caching, the optical disk drive (5) following an address of data accessed by the host computer (1) even when such data is not needed to be immediately written in the optical disk drive (5), and determining whether or not the writing of the data from the host computer (1) is normally terminated on the basis of normal termination of said caching of the data and of normal termination of said tentatively accessing.

11. A normal termination detecting method according to claim 10 wherein said data caching and said tentatively accessing are parallely executed.

# F I G. 1

HOST COMPUTER

EMULATION UNIT

HARD DISK DRIVE

OPTICAL DISK DRIVE

HARD DISK EMULATOR

# F I G. 2

HOST COMPUTER

HARD DISK DRIVE

OPTICAL DISK DRIVE

# F I G. 3

HOST COMPUTER

HARD DISK DRIVE

OPTICAL DISK DRIVE

# F I G. 4

# FIG. 5

DATA CACHE UNIT
A10a
OPTICAL DISK DRIVE
A10b

FIXED CACHE AREA

NORMAL CACHE AREA

A4
A12a

A5
A12b

# FIG. 6

DATA CACHE UNIT
OPTICAL DISK DRIVE

HOST COMPUTER

FIXED CACHE AREA

A10a  A4

A10b  A5

# F I G. 7

CONCATENATION PROCESSING
OF ADDRESS INFORMATION

| NO. | CONDITION | CONTENTS OF PROCESSING |
|---|---|---|
| 1 | IT IS DECIDED ON THE BASIS OF ADDRESS INFORMATION THAT EMULATION ADDRESSES SIMPLY CONTINUE IN THEIR STATE WHERE ADJACENT CACHE DATA IN A CACHE AREA HAVE BEEN WRITTEN IN THE CACHE AREA. | A PLURALITY OF PIECES OF ADDRESS INFORMATION ARE INTEGRATED INTO ONE PIECE OF THE ADDRESS INFORMATION. |
| 2 | IT IS DECIDED ON THE BASIS OF ADDRESS INFORMATION THAT EMULATION ADDRESSES CONTINUE, PARTLY OVERLAPPED IN THEIR STATE WHERE ADJACENT CACHE DATA IN A CACHE AREA HAVE BEEN WRITTEN IN THE CACHE AREA. | (1) THE CONDITIONS ARE DECIDED UPON LATER WRITING OF THE CACHE DATA. (2) THE CACHE DATA ARE WRITTEN WHILE SUPERSCRIBING THE OVERLAPPED PORTION. (3) THE PREVIOUS ADDRESS INFORMATION IS UPDATED SUCH THAT THE PRESENT ADDRESS INFORMATION IS INCLUDED IN THE PREVIOUS ADDRESS INFORMATION. |

# F I G. 8

INCLUSIVE PROCESSING
OF ADDRESS INFORMATION

| NO. | CONDITION | CONTENTS OF PROCESSING |
|-----|-----------|------------------------|
| 1 | AN EMULATION ADDRESS OF ADDRESS INFORMA- TION OF CERTAIN CACHE DATA INCLUDES AN EMU- LATION ADDRESS OF CACHE DATA RECORDED PREVIOUSLY. | (1) THE INCLUDED CACHE DATA ARE MADE VALID.<br><br>(2) A PLURALITY OF PIECES OF ADDRESS INFORMATION ARE INTEGRATED INTO ONE. |

# F I G. 9

```
┌─────────────────────────────┐
│  RECORDING PROCESSING        │
│  INTO OPTICAL DISK DRIVE     │
└─────────────────────────────┘
              │
              ▼
┌─────────────────────────────┐  202
│  POSITION (SEEK)             │
│  RECORDING  HEAD             │
└─────────────────────────────┘
              │
              ▼
┌─────────────────────────────┐  204
│  WAIT FOR ROTATION OF        │
│  RECORDED ADDRESS(BLOCK)     │
└─────────────────────────────┘
              │
              ▼
┌─────────────────────────────┐  206
│  RECORD DATA IN RECORDING    │
│  MEDIUM DISK                 │
└─────────────────────────────┘
              │
              ▼
┌─────────────────────────────┐
│           E N D              │
└─────────────────────────────┘
```

# F I G. 10

```
        ┌─────────────────────────┐
        │  RECORDING  PROCESSING  │
        └─────────────────────────┘
                    │
        ┌───────────┴───────────┐
        │   PARALLEL  EXECUTION │
```

102                                           104

┌─────────────────────────┐     ┌─────────────────────────┐
│ RECORDING INTO DATA      │     │ TEMPORAL    ACCESSING   │
│ CACHE DEVICE             │     │ TO OPTICAL DISK         │
│                          │     │ DRIVE                   │
└─────────────────────────┘     └─────────────────────────┘

              WAITING FOR TERMINATION
                        ○

                       110
              ◇ NORMALLY
           TERMINATED DATA          NO
              CACHE UNIT ?
                        │
                      YES

                       112
              ◇ NORMALLY
           TERMINATED OPTICAL       NO
              DISK DRIVE ?
                        │
116              YES                      118

┌─────────────────────────┐     ┌─────────────────────────┐
│ TRANSFER  OF            │     │ TRANSFER  OF            │
│ NORMAL  TERMINATION    │     │ ABNORMAL TERMINATION    │
│ INFORMATION            │     │ INFORMATION             │
└─────────────────────────┘     └─────────────────────────┘

              ┌─────────────────┐
              │     E N D       │
              └─────────────────┘

# FIG. 11

| | |
|---|---|
| OMB | |
| | D 3 ( 4 M B ) — A10b |
| 4 | |
| | D 1 — A12b |
| | D 1 |
| | READ AREA |
| | D2 ( 4M B ) — A14b |
| | D 1 — A12b |
| 300 | |

# FIG. 12

BLOCK ADDRESS

| | | |
|---|---|---|
| OMB | | 000000 |
| | A12a | |
| | D 1 | |
| | (32M B) | |
| 32 | | 00FFFF |
| | A14a | 010000 |
| | D2 | |
| | (4M B) | |
| 36 | | 011FFF |
| | A10a | 012000 |
| | D 3 | |
| | (4M B) | |
| 40 | | 013FFF |

# F I G. 13

| NO. | FLAG | CACHE ADDRESS (HARD DISK ADDRESS) | | EMULATION ADDRESS (OPTICAL DISK ADDRESS) | |
|---|---|---|---|---|---|
| | | START ADDRESS | END ADDRESS | START ADDRESS | END ADDRESS |
| 1 | 1 | 000000 | 00001E | 01F001 | 01F01F |
| 2 | 1 | 00001F | 00003E | 01F020 | 01F03F |
| 3 | 1 | 00003F | 000041 | 00002A | 00002C |
| 4 | 1 | 000042 | 000044 | 00002D | 00002F |
| 5 | 1 | 000045 | 00004C | 000030 | 000037 |
| 6 | 1 | 00004D | 000054 | 000038 | 00003F |
| 7 | 1 | 000055 | 000094 | 000040 | 00007F |
| 8 | 0 | : | : | : | : |
| 9 | 0 | : | : | : | : |
| 1 0 | 0 | | | | |
| 1362 | 0 | | | | |
| 1363 | 0 | | | | |
| 1364 | 0 | | | | |
| 1365 | 0 | | | | |

# F I G. 14

| NO. | FLAG | CACHE ADDRESS (HARD DISK ADDRESS) | | EMULATION ADDRESS (OPTICAL DISK ADDRESS) | |
|---|---|---|---|---|---|
| | | START ADDRESS | END ADDRESS | START ADDRESS | END ADDRESS |
| 1 | 1 | 000000 | 00003E | 01F001 | 01F03F |
| 2 | 1 | 00003F | 000093 | 00002A | 00007F |
| 3 | 0 | (00003F) | (000041) | (00002A) | (00002C) |
| 4 | 0 | (000042) | (000044) | (00002D) | (00002F) |
| 5 | 0 | (000045) | (00004C) | (000030) | (000037) |
| 6 | 0 | (00004D) | (000054) | (000038) | (00003F) |
| 7 | 0 | (000055) | (000094) | (000040) | (00007F) |
| 8 | 0 | ⋮ | ⋮ | ⋮ | ⋮ |
| 9 | 0 | ⋮ | ⋮ | ⋮ | ⋮ |
| 10 | 0 | | | | |
| 1362 | 0 | | | | |
| 1363 | 0 | | | | |
| 1364 | 0 | | | | |
| 1365 | 0 | | | | |

# F I G. 15

| NO. | FLAG | CACHE ADDRESS (HARD DISK ADDRESS) | | EMULATION ADDRESS (OPTICAL DISK ADDRESS) | |
|---|---|---|---|---|---|
| | | START ADDRESS | END ADDRESS | START ADDRESS | END ADDRESS |
| 1 | 1 | 000000 | 00001E | 01F001 | 01F01F |
| 2 | 1 | 00001F | 00002E | 01F020 | 01F02F |
| 3 | 1 | 00002F | 00007E | 01F000 | 01F04F |
| 4 | 1 | 00006F | 000071 | 00002A | 00002C |
| 5 | 1 | 000072 | 000074 | 00002D | 00002F |
| 6 | 1 | 000075 | 0000B4 | 000020 | 00005F |
| 7 | 1 | 0000B5 | 0000D4 | 000080 | 00009F |
| 8 | 0 | ⋮ | ⋮ | ⋮ | ⋮ |
| 9 | 0 | ⋮ | ⋮ | ⋮ | ⋮ |
| 10 | 0 | | | | |
| 1362 | 0 | | | | |
| 1363 | 0 | | | | |
| 1364 | 0 | | | | |
| 1365 | 0 | | | | |

# F I G. 16

| NO. | FLAG | CACHE ADDRESS (HARD DISK ADDRESS) | | EMULATION ADDRESS (OPTICAL DISK ADDRESS) | |
|---|---|---|---|---|---|
| | | START ADDRESS | END ADDRESS | START ADDRESS | END ADDRESS |
| 1 | 1 | 00002F | 00007E | 01F000 | 01F04F |
| 2 | 1 | 000075 | 0000B4 | 000020 | 00005F |
| 3 | 1 | 0000B5 | 0000E4 | 000080 | 0000AF |
| 4 | 0 | (00006F) | (000071) | (00002A) | (00002C) |
| 5 | 0 | (000072) | (000074) | (00002D) | (00002F) |
| 6 | 0 | (000075) | (0000B4) | (000020) | (00005F) |
| 7 | 0 | (0000B5) | (0000D4) | (000080) | (00009F) |
| 8 | 0 | : | : | : | : |
| 9 | 0 | : | : | : | : |
| 10 | 0 | | | | |
| 1362 | 0 | | | | |
| 1363 | 0 | | | | |
| 1364 | 0 | | | | |
| 1365 | 0 | | | | |